# EUROPEAN PATENT SPECIFICATION

(11) **EP 4 225 874 B1**
(45) Date of publication and mention of the grant of the patent: **02.09.2026**
(21) Application number: 21798293.3
(22) Date of filing: 08.10.2021
(51) Int. Cl.: C10G 9/24, C10G 9/20, B01J 19/08, B01J 19/24

(54) **STEAM CRACKING METHOD IN AN ELECTRIC REACTOR**
DAMPFSPALTUNGSVERFAHREN IN EINEM ELEKTRISCHEN REAKTOR
METHODE DE VAPOCRAQUAGE DANS UN RÉACTEUR ÉLECTRIQUE

(30) Priority: 09.10.2020 EP 20200980
(43) Date of publication of application: 16.08.2023
(73) Proprietor: Pauletto, Gianluca, 85354 Freising (DE)
(72) Inventor: Pauletto, Gianluca, 85354 Freising (DE)
(74) Representative: Kaya, Erdem
(86) International application number: PCT/EP2021/077890
(87) International publication number: WO 2022/074212

(56) References cited:
- EP-A1- 3 895 795
- WO-A1-2013/135668
- US-A- 5 413 813
- US-A1- 2002 129 930
- US-A1- 2018 243 711
- US-A1- 2019 009 262
- US-B2- 8 057 707
- US-B2- 9 867 232
- PAULETTO GIANLUCA ET AL: "FeCrAl as a Catalyst Support", CHEMICAL REVIEWS, vol. 120, no. 15, 30 June 2020 (2020-06-30), US, pages 7516 - 7550, XP055880192, ISSN: 0009-2665, DOI: 10.1021/acs.chemrev.0c00149

## Description

### TECHNICAL FIELD

The invention relates to a method for producing olefins via steam cracking from a fed reactive mixture stream composed of steam and hydrocarbons in a reactor shell having a coated structured ceramic bed with electrical resistance heating elements.

### BACKGROUND OF THE INVENTION

Ethylene is the most used chemical and it is industrially produced following a non-catalytic gas phase radical reaction. The demand of ethylene as building block in the so called "Ethylene chain", that includes polyethylene, polyvinylchloride, and other styrene-related polymers as final products, is constantly increasing and the current demand has reached 200 million ton per year. Since it is expected that non-catalytic steam cracking will be the most important process to supply olefins in the next decades, considerable effort is dedicated to further improve and decarbonize this process.

The most important pathway to produce ethylene and propylene is steam cracking of naphtha, ethane, propane, gas oil, and liquefied petroleum gas. Steam crackers are the most important reacting units in the petrochemical industry as they supply the feedstocks for a wide variety of chemical processes. Steam cracking represents the most energy consuming thermochemical process that currently requires approximately 15% of the total primary energy used in the chemical industry. Approximately 300 million ton of CO₂, the same annual CO₂ emission of Italy, the world's eighth-largest economy, are emitted by this process.

More than 90% of the emitted CO₂ is connected with the production of heat, via fuel combustion, that is required to compensate for the endothermicity of the reaction. Indeed, energy fees represent more than 70% of the operational costs. This energy is provided via fuel combustion that involves burning fresh hydrocarbons as well as secondary products of the process.

Steam cracking is carried out within furnaces that can be divided into two different parts. In the upper part of the furnace the feeds, hydrocarbon and steam, are preheated exploiting the heat capacity of hot flue gases. In the bottom part (radiant section) the reactive mixture, preheated at temperature from 500 °C to 700 °C, cross-over temperature, is fed and reacted within the cracking/reactor coils that are located within the firebox.

Only 40 - 50% of the energy produced by the burners of the firebox is absorbed and used by the reaction. The remaining heat is carried by the flue gases and it is used to preheat the feed in the convective section, making possible to operate at overall energy efficiency higher than 90%, achieved thanks to improved and extensive heat recovery.

The high reaction endothermicity, the high reaction temperature (750 °C - 900 °C) and the short residence time (below 1 s) require heat fluxes at the external surface of the reactor coils higher than 30 kW m⁻².

As result there is not uniform radial temperature profile within the reactor coils that increases coke formation on the internal walls of the radiant tubes. These deposits create an additional resistance to the heat transfer. In industry this variable heat transfer resistance requires modulation of the combustion that affects the outside (interface radiant coils - burner) skin temperature. This changes the temperature gradient across the wall of the coils thus the driving force of the heat transfer.

The maximum operating skin temperature (approximately 1150 °C) imposes regular decoking of the metal cracking coils, via gasification of coke into CO and CO₂ using air and/or steam. These decoking procedures involve stops of the production and thereby expensive routine operations.

Engineered coatings for the internal surface of the metal coils that create a barrier for coke deposition (barrier coatings) or kinetically minimize its formation (catalytically active coatings), enhancing coke gasification, extend operation of the reactor coils before regeneration is required. A comprehensive review on the state of the art with regards to coke formation and anti-coking technology can also be found in the "State-of-the-art of Coke Formation during Steam Cracking: Anti-Coking Surface Technologies" article written by Symoens S. et al. and published by Industrial & Engineering Chemistry Research 2018, 571, p. 16117 - 16136.

The mismatch between thermal expansion coefficients and the low chemical affinity between ceramic coatings and metal surfaces of the reactor coils (e.g. alloys containing NiCrNb with Ti) strongly affect the stability and industrial applicability of these coatings.

Ceramic coils would increase operating temperature, efficiency of the furnaces, and product selectivity. At the same time, they would minimize coke deposition, and provide adequate surfaces for deposition of coatings. However, the mechanical features of ceramic reactor coils make their application unsuitable for cracking furnaces.

For these reasons, the improvements of the cracking furnaces have mainly involved modifications of the metal coils including: coil section geometry, coil 3D configuration, and internal structured packing. Additionally, metals that form superficial stable oxides, such as chromia or alumina, have been developed as they have shown superior resistance to high temperature and coke formation.

EP3574991 A1 discloses a reactor system for steam reforming heated by electrification of an electrically conductive structured catalyst (e.g., FeCrAl structured catalyst). A similar configuration without a catalytically active material could also be used for steam cracking as described in WO 2021/094346 A1. The system involves a pressure reactor shell, an internal thermal insulation layer, at least two electrical contacts that supply electricity to a macroscopic structure of an electrically conductive material that can support a ceramic coating. US 20140060014 also discloses an electrically heated catalyst that involves electrification of a macroscopic metal that supports a catalyst. More details on the usage of structured metal for hight temperature reactions can also be found in the "FeCrAl as a Catalyst Support" article written by Pauletto G. et al. and published by Chemical Reviews 2020, 120, 15, p. 7516-7550.

Even if the electrification of a macroscopic electrically conductive structure/supports brings improvements into the design of reactors, these configurations have mayor technical difficulties and high industrialization costs when applied in highly endothermic processes that involve temperatures higher than 700 °C and heat fluxes greater than 10 kW m⁻². These problems are mainly connected with the electrification of the macroscopic electrically conductive structures that complicates the design of the power contact rails, of the power supply, and the related control system. Industrialization of heating elements and process heaters that exploit macroscopic structures of electrically conductive materials, for applications at temperatures greater than 800 °C, is currently not feasible and complicated due to the inhomogeneous heat generation. Furthermore, the reaction endothermicity of steam cracking imposes surface loading considerably higher compared to traditional gas flow heaters that only exchange specific heat.

Differently, US1727584, US5400432, and US9867232B2 disclose the design of heating elements comprising ceramic material with co-axial electric heating wires that can be used as gas heaters to heat up fluids up to 1100°C. Such apparatus cannot be used for steam cracking due to the low lifetime of the uncoated electrical resistance heating elements and to the deleterious carbon formation. Additionally, clogging of the channels with consequent local overheating would further decrease.

In a recent patent application EP3895795A1, a reactor with an electrically heated structured ceramic catalyst has been disclosed for producing synthesis gas, hydrogen or carbon dioxide following catalytic reactions. The structured ceramic catalyst reaches temperature up to 1300 °C. Skin temperature and potential local hot-spots of the electrical resistance heating element are controlled and minimized by the reaction endothermicity that acts as energy sink. As a consequence, the lifetime of the assembly is maximized.

US2019009262 discloses a parallel passage fluid contactor structure for chemical reaction processes has one or more segments, where each segment has a plurality of substantially parallel fluid flow passages oriented in an axial direction; cell walls between each adjacent fluid flow passages and each cell wall has at least two opposite cell wall surfaces. The structure also includes at least one active compound in the cell walls and multiple axially continuous conductive filaments either embedded within the cell walls or situated between the cell wall surfaces. The conductive filaments are at least one of thermally and electrically conductive, are oriented in axially, and are in direct contact with the active compound, and are operable to transfer thermal energy between the active material and the conductive filaments. Heating of the conductive filaments may be used to transfer heat to the active material in the cell walls. Methods of manufacturing the structure are discussed.

US2018243711 discloses a reactor system for carrying out an endothermic catalytic chemical reaction in a given temperature range upon bringing a reactant into contact with a catalyst material. The reactor system includes a reactor unit arranged to accommodate catalyst material including one or more ferromagnetic macroscopic supports susceptible for induction heating where the one or more ferromagnetic macroscopic supports are ferromagnetic at temperatures up to an upper limit of the given temperature range. The one or more ferromagnetic macroscopic supports are coated with an oxide, and the oxide is impregnated with catalytically active particles. The reactor system moreover includes an induction coil arranged to be powered by a power source supplying alternating current and being positioned so as to generate an alternating magnetic field within the reactor unit upon energization by the power source, whereby the catalyst material is heated to a temperature within the temperature range by the alternating magnetic field.

WO2013135668 discloses a chemical reactor system, comprising a first flow reactor for reacting a fluid comprising reactants and a second flow reactor connected downstream of the first flow reactor and/or parallel thereto for reacting a fluid comprising reactants. The second flow reactor, as viewed in the direction of flow of the fluid, comprises a plurality of heating levels (which are electrically heated by means of heating elements and wherein the fluid can flow through the heating levels, wherein a catalyst is arranged on at least one heating element, where it can be heated.

US2002129930 discloses a reactor device for carrying out chemical reactions requiring heat exchange, the reactor is elongate along an axis, and has, at a first end, at least one orifice for supplying at least one reactant, at an opposite end, at least one orifice for evacuating the effluents formed, a plurality of heat exchangers separated by at least one internal partition and passages for circulating the reactant or reactants and/or effluents, provided between the heat exchangers and the internal partitions. The reactor has at least one enclosure made of refractory material providing heat insulation and containing a heat exchangers and internal partitions. The enclosure is contained in an envelope to contain the reactant or reactants and/or effluents circulating inside the reactor.

US2017094725 discloses a heating element for heating gases to high temperatures includes at least one tube arranged for the flow of gas to be heated and an electrical heating wire in the tube, which transfers heat to the gas flowing past. A process heater and a corresponding heating element are provided to permit generation of gas temperatures up to 1000° C. or above and having a lifespan 10 times longer than conventional heating coils. The heating wire is formed as a heating rod extending along the tube axis, whose maximum clear distance to the inner wall of the tube does not exceed a value of 10 mm over at least 80% of the circumference and/or at least 80% of the overlapping length of the tube and heating rod.

US2009283451 discloses a combination of compounds and a process using such combination useful for reducing or preventing coke formation in thermal cracking furnaces such as ethylene steam crackers. The combination is comprised of one or more compound of the formula R-Sx-R' and one or more compound selected from the following group: R1 R2CS3; R1R2C-CR3R4; RSH; R1SxR2; R1R2CH2; R1R2R3R4(C4S); and R1R2R3R4R5R6Si2O.

US5413813 discloses a reactor. In order to reduce the rate of coke formation during the industrial pyrolysis of hydrocarbons, the interior surface of a reactor is coated with a thin layer of a ceramic material, the layer being deposited by thermal decomposition of a non-oxygen containing siliconnitrogen precursor in the vapor phase, in an inert or reducing gas atmosphere in order to minimize the formation of oxide ceramics.

Stamatis A Sarris et. Al "Alumina-based Coating for Coke Reduction in Steam Crackers" discloses a method for reducing coke formation in steam crackers through the use of an alumina-based coating. This innovative coating is applied to the internal surfaces of steam cracking units, effectively mitigating the buildup of carbon deposits. By reducing coke formation, the coating enhances the efficiency and operational lifespan of steam crackers, leading to improved productivity and reduced maintenance costs in industrial applications.

### BRIEF SUMMARY OF THE INVENTION

In view of the above mentioned technical problems encountered in the prior art, one object of the present invention is to minimize the coke formation, pressure drop, carbon dioxide emissions, and to increase the reaction temperature and product selectivity while simplifying and intensifying the production of olefins via steam cracking.

Another object of the present invention is to provide a method for producing olefins via steam cracking, with lower capital and operating costs as well as minimized downtime.

In order to achieve the above objects, the present invention relates to a method for producing olefins via steam cracking from a fed reactive mixture stream composed of steam and hydrocarbons in a reactor shell comprising at least one reactive stream duct essentially having a reactive stream inlet, a product stream outlet and a reaction section provided between said reactive stream inlet and product stream outlet, an insulation filling at least partly encompassing said reactive stream duct, at least one monolithic structured ceramic bed accommodated in said reaction section and having a plurality of hollow flow paths which are configured to allow the reactive mixture stream to pass therethrough, at least one electrical resistance heating element, powered by at least two electrical feeds connected to an electrical power supply, configured to heat the reactive mixture stream to a predetermined temperature that initiates a non-catalytic gas phase radical reaction of steam cracking, and a coating selected from a barrier coating or a catalytically active coating provided on the surface of the hollow flow paths facing the electrical resistance heating element contacting with the reactive mixture stream so that coke deposition is minimized, wherein the barrier coating and/or the catalytically active coating has a thickness lower than 500 µm, said method comprising the steps of:
placing said electrical resistance heating element longitudinally within said hollow flow paths, extending co-axially to the flow direction of the reactive mixture stream in a manner that a flowing passage still remains inside the hollow flow paths, wherein meandered sections of the electrical resistance heating element remain outside the hollow flow paths and wherein the electrical resistance heating element is inserted from the flow path inlet of a first hollow flow path and exited from the opposite side of the same, the flow path outlet, and then, the electrical resistance heating element enters a second hollow flow path , exits and continues its way in the remaining hollow flow paths;
energizing the electrical resistance heating element via an electric power supply so that the reactive mixture stream is heated up to 1200 °C
feeding reactive mixture stream with a temperature ranging from 400 °C to 700 °C and a pressure ranging from 1 bar to 10 bar to the reactor shell (10) through said reactive stream inlet
allowing the reactive mixture stream to pass through said hollow flow paths in a manner that the reactive mixture stream contacts the electrical resistance heating element and the structured ceramic bed
allowing a product stream of olefins to exit from said product stream outlet

In the method, the reactive mixture stream undergoes non-catalytic gas-phase radical reaction of steam cracking in the reaction section

### REFERENCE NUMERALS

10 Reactor shell
11 Insulation filling
111 Diverting section
20 Reactive stream duct
21 Reactive stream inlet
22 Distribution section
23 Reaction section
24 Collecting section
241 Deposition chamber
25 Product stream outlet
30 Structured ceramic bed
31 Coating
311 Barrier coating
312 Catalytically active coating
32 Hollow flow paths
321 Flow path inlet
322 Flow path outlet
323 Flowing passage
40 Electrical resistance heating element
41 Meandered section
50 Electrical power supply
51 Electrical feeds
W: Width

### BRIEF DESCRIPTION OF FIGURES

Figure 1 illustrates a vertical cross section of a reactor shell.
Figure 2 illustrates a vertical cross section of another embodiment of a reactor shell.
Figure 3 illustrates a horizontal cross section of a reactor shell.
Figure 4 illustrates a horizontal cross section of another embodiment of a reactor shell.
Figure 5 illustrates representative view of a coating on a structured ceramic bed.
Figure 6 illustrates representative view of a coating on a structured ceramic bed and electrical resistance heating element.
Figure 7 illustrates a vertical cross section of a structured ceramic bed used in the reactor shell.

### DETAILED DESCRIPTION OF THE INVENTION

Preferred embodiments of the present invention will now be more particularly described by way of non-limiting examples with reference to the accompanying drawings.

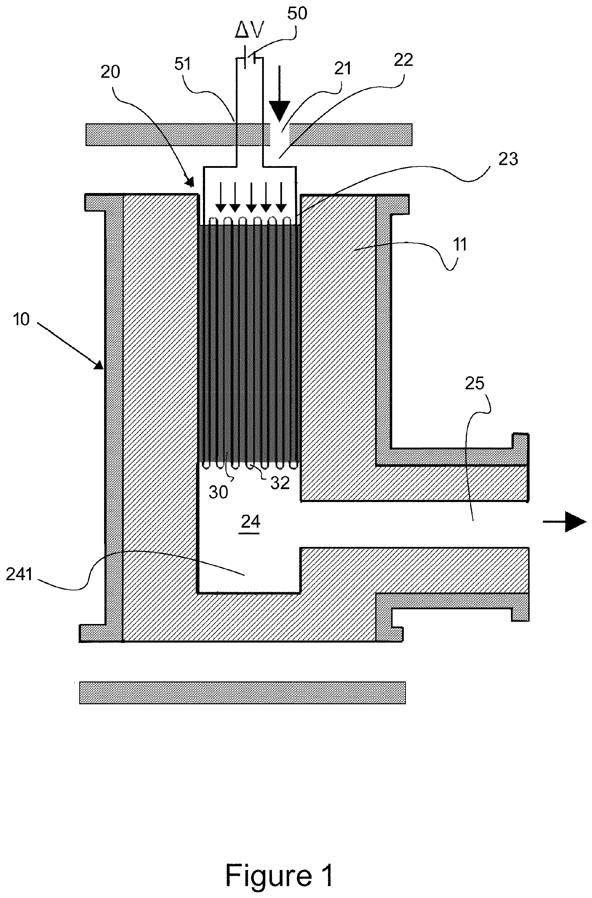

In Figure 1, a shell (10) of a reactor for the production of olefins via steam cracking from a fed reaction stream, i.e. a reactive mixture stream, is shown. Said reactor shell (10) with an insulation filling (11) mainly comprises a reactive stream duct (20), which is formed within the reactor shell (10) so as to be encompassed by said insulation filling (11), and a structured ceramic bed (30) which is arranged within said reactive stream duct (20) for realizing the non-catalytic steam cracking within the reactor shell (10). Said structured ceramic bed (30) is equipped with an electrical resistance heating element (40), which is fed through at least two electrical feeds (51) that are running through the reactor shell (10) in an insulated manner from the reactor shell (10). Said electrical feeds (51) are connected to an electrical power supply (50) which is placed outside the reactor shell (10) and configured to heat the gas stream (30) up to a desired temperature so that the intended reaction takes place. Thanks to this arrangement, the reactive mixture stream flows through the reactive stream duct (20) and exits therefrom after being reacted. The structural and process details will hereunder be explained in detail.

The reactive stream duct (20) comprises, in downstream order, at least one reactive stream inlet (21), distribution section (22), reaction section (23), collecting section (24) and product stream outlet (25). In the preferred embodiment, said distribution section (22) is provided in truncated pyramidal form. However, in other embodiments, the distribution section (22) may have truncatedconical or cylindrical or any other 3D-geometry. Said reaction section (23), comprises the structured ceramic bed (30) and it has equivalent diameter from 5 cm to 300 cm. In one of the embodiments, two reaction sections (23) are provided and accordingly the reactor shell (10) have two reactive stream inlets (21). In this embodiment, the reaction sections (23) are provided as aligned in the same direction in a way that the collecting section (24) is positioned therebetween. The product stream outlet (25) is placed as being perpendicular to the reaction sections (23) in the continuation of the collecting section (24). The insulation filling (11) is provided forming a diverting section (111) in the collecting section (24). The diverting section (111) is configured to divert all produced olefins (i.e. product stream) towards the product outlet stream (25). In detail, the diverting section (111) has a width (W) from 0.5 to 1.0 of the width of the structured ceramic bed (30) in order to divert the product stream towards the product stream outlet (25) in a manner that the product stream does not remain in the collecting section (24). In the embodiment having one reaction section (23), the product stream outlet (25) may be positioned as being perpendicular to the reaction section (23) or in the direction of the same, as connected to the collecting section (24).

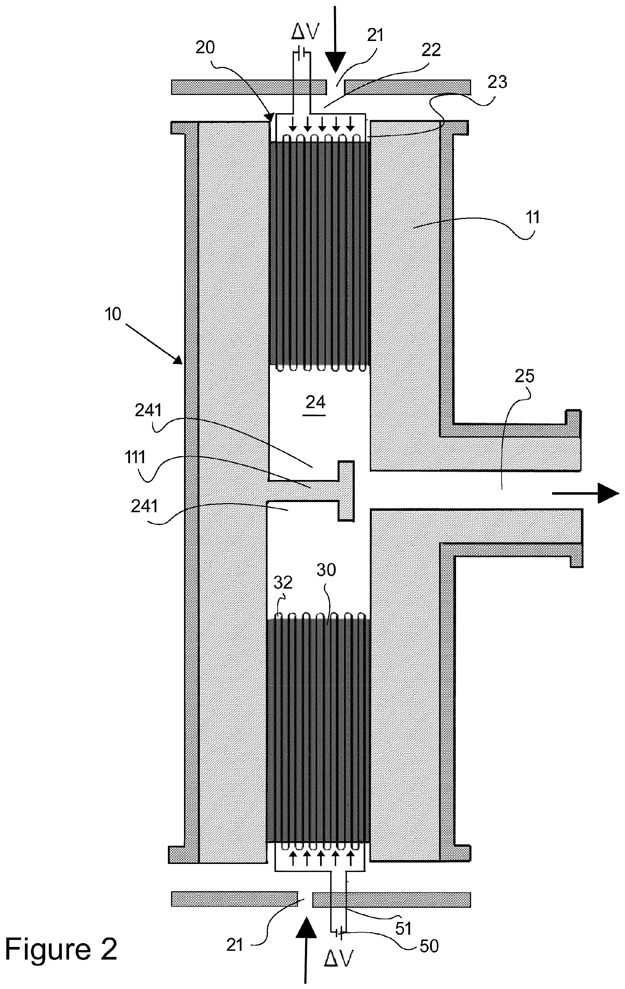

Referring to figure 1, 2 and 4, a deposition chamber (241) in a cavity shape is provided in the continuation of the reaction section (23), in a different level from the product stream outlet (25). In the embodiment that the reactor shell (10) has one reaction section (23), the deposition chamber (241) is provided in the lower level than the product stream outlet (25). In the embodiment shown in figure 2, the diverting section (111) defines two depositions chambers (241) as facing the reaction sections (23).

The structured ceramic bed (30) is arranged within the reaction section (23). Referring to figures 1, 2 and 3, the structured ceramic bed (30) has plurality of hollow flow paths (32) which allow the reactive mixture stream to pass therethrough. The structured ceramic bed (30) is a monolithic structured ceramic bed (30) and can be formed as a combination of multiple ceramic subunits having hollow flow paths (32), disposed in a juxtaposed manner and having axial length lower than 300 cm. Accordingly, form and deployment of the hollow flow paths (32) are defined by the structure of the structured ceramic bed (30). The manufacturing of the structured ceramic bed (30) makes use of no limiting examples of ceramic material including SiO₂, Al₂O₃, Y₂O₃, WO₃, ZrO₂, TiO₂, MgO, CaO, CeO₂ and mixture thereof.

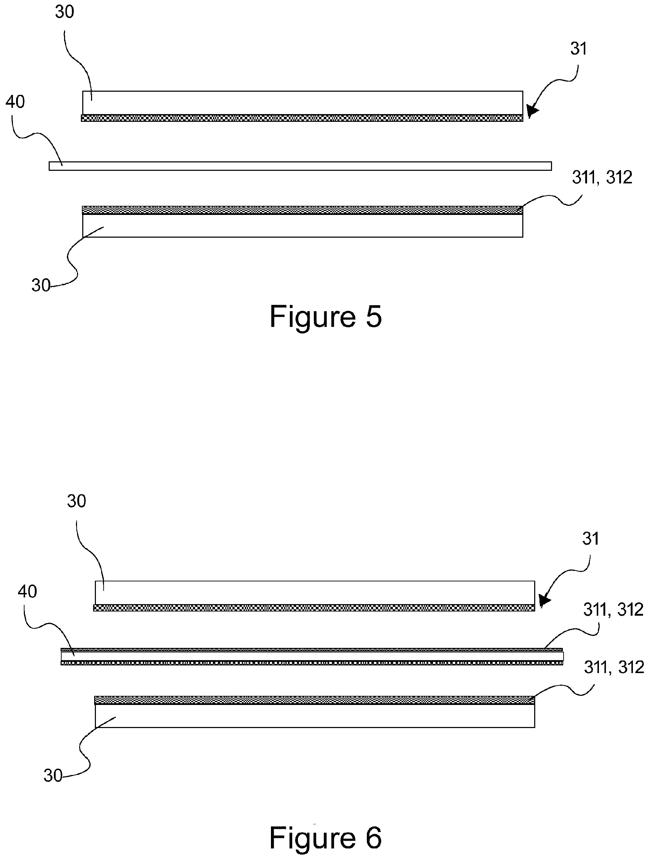

Referring to figure 5, a coating (31) is provided on the surface of the hollow flow paths (32) facing the electrical resistance heating element (40). The coating (31) is a barrier coating (311) or a catalytically active coating (312) wherein the barrier coating (311) and/or the catalytically active coating (312) has a thickness lower than 500 µm. The material of both barrier coating (311) and catalytically active coating (312) can contain elements from the group IIA, IIIB, IVB, VIIB, IIIA, IVA of the periodic table. Thanks to the physicochemical properties of the structured ceramic bed (30), the deposition, adhesion, and stabilization of the coating (31) is favored compared to any other configurationes where the coating is supported on a metal structure. Referring to Figure 6, in an alternative embodiment, the coating (31) is also provided on the surface of the electrical resistance heating element (40) facing the structured ceramic bed (30).

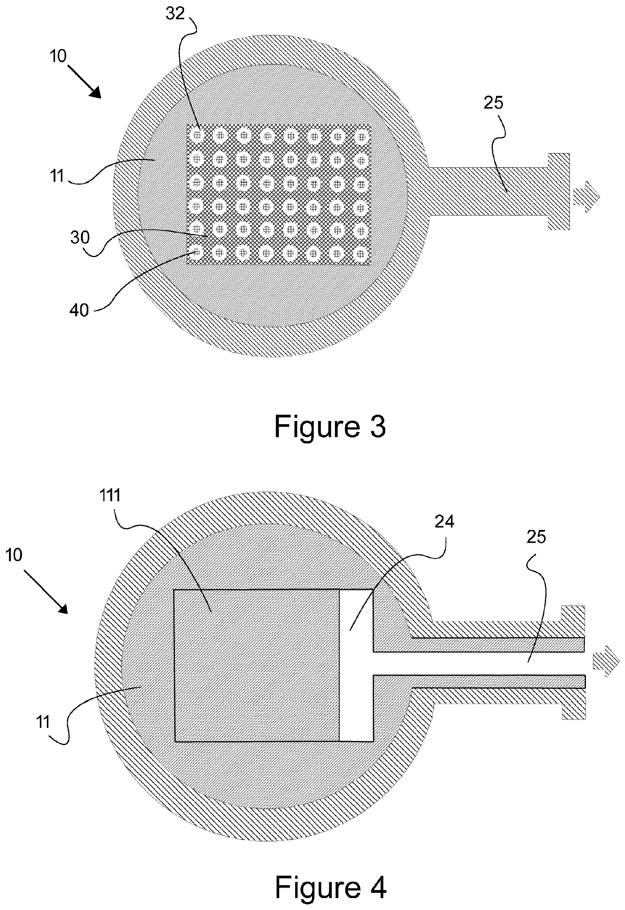

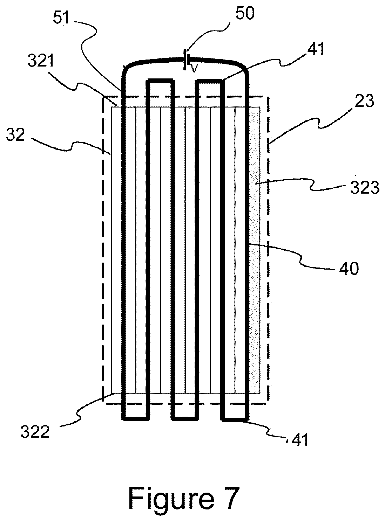

As shown in Figures 3 and 7, the electrical resistance heating element (40) used in the method according to the invention is arranged within the hollow flow paths (32) so that the contact of the electrical resistance heating element (40) and the reactive mixture stream is provided. The electrical resistance heating element (40) is meandered through some or all the hollow flow paths (32). In this specification, the wording "meandering" means that the electrical resistance heating element is inserted from a flow path inlet (321) of a first hollow flow path (32) and exited from the opposite side of the same, a flow path outlet (322). Afterwards, the electrical resistance heating element (40) enters a second hollow flow path (32), exits, and continues its way in the remaining hollow flow paths (32), as shown in Figures 3 and 7.

The physical proximity of the electrical resistance heating element (40) with the structured ceramic bed (30), the high view factor, and the direct contact with the reactive mixture stream enhance the heat transfer via radiation, convection, and conduction. Related to this, the combination of the structured ceramic bed (30) and the electrical resistance heating element (40) must be arranged in a way to minimize the pressure drop while maintaining high heat and mass transfer. For instance, it is preferred that the electrical resistance heating element (40) is sized to leave an adequate flowing passage (323) inside the hollow flow path (32) once it is installed so that the flow of the reactive mixture stream is minimally affected while maintaining proximity to the structured ceramic bed (30), i.e. to inner walls of the hollow flow paths (32).

On the other hand, the deployment and installation of the electrical resistance heating element (40) within the hollow flow paths (32) is imposed by the selected type of the structured ceramic bed (30).

For instance, the structured ceramic bed (30) is an assembly of tubes with longitudinal channels combined one next to the other in a juxtaposed manner, defining a grid like cross section. Thanks to the juxtaposed arrangement of these subunits, the flow of the reactive mixture stream is confined inside the hollow flow paths (32) where the reactive mixture stream is heated and reacted. If the subunits are combined in a not juxtaposed manner, the reactive mixture could flow through bypass regions left between the neighbouring subunits. Since said bypass regions are outside of the hollow flow paths (32), the reactive mixture stream would not contact the electrical resistance heating elements (40). As consequence, fixed the temperature of the electrical resistance heating elements (40), the temperature of the reactive mixture stream would decrease with a resulting lower conversion and selectivity. According to the invention, a monolithic structured ceramic bed (30) is used within the reactor shell (10), as shown in Figure 3 and 7, and the electrical resistance heating element (40) is placed longitudinally within the hollow flow paths (32), extending co-axially to the flow direction of the reactive mixture stream. The meandered sections (41) of the electrical resistance heating element (40) remain outside the hollow flow paths (32). Thus, when installing the electrical resistance heating element (40), preferably a resistive wire or ribbon, in the structured ceramic bed (30), the electrical resistance heating element (40) is inserted from the flow path inlet (321) of the first hollow flow path and exited from the opposite side of the same, the flow path outlet (322). Afterwards, the electrical resistance heating element (40) enters the second hollow flow path (32), exits and continues its way in the remaining hollow flow paths (32), as shown in Figures 3 and 7.

If, foam type, i.e. open cell form type, structured ceramic bed (30) is selected such that the electrical resistance heating element (40) may extend omnidirectional similar to the hollow flow paths (32) defined by the foamy structure. In detail, the electrical resistance heating element (40) is passed through the open cells, defining the hollow flow paths (32), of the structured ceramic bed (30) from its inlet to the outlet opening, creating a heating passage along the placement of the electrical resistance heating element (40). In this case, the reactive mixture stream flows omnidirectional due to the omnidirectional open structure of the open cell foam of the structured ceramic bed (30). The meandering of the electrical resistance heating element (40) is done in a similar way to the previously described embodiment, namely, being meandered along the hollow flow paths (32) in open cell structure along the structured ceramic bed (30), forming heating passages where the reactive mixture stream is heated and reacted.

Preferably, the electrical resistance heating element (40) is a resistive wire. The resistive wire has a cross surface area lower than 0.30 cm² thus can be easily meandered and hosted in the hollow flow paths (32) of the ceramic bed (30) preferably formed as a juxtaposed assembly of subunits. In alternative embodiments, however, electrical resistance heating element (40) in ribbon or rod forms may also be used. As modifying the geometry of the electrical resistance heating element (40) it is possible to increase the heat exchange surface area up to 30% with a direct impact on the surface load (heat flux at the external surface) of the resistance heating element (40). Additionally, the geometry of the electrical resistance heating element (40) modifies fluid dynamics, increases Reynolds number, thus enhance transport phenomena. In this way it is possible to operate outside the laminar regime, traditional for structured ceramic bed (30), as the geometry of the electrical resistance heating element (40) modifies the flow patterns inducing local eddies and/or swirling flow.

The material of the electrical resistance heating element (40) is FeCrAl alloys or other material having resistivity from 1 x 10⁻⁷ Ω m to 1 x 10⁻⁵ Ω m.

In the light of the above mentioned structural properties of the invention, how the reaction process progress is explained below in detail.

Firstly, a gaseous reactive mixture stream is fed through the reactive stream inlet (21) into the distribution section (22). Said reactive mixture stream has a temperature ranging from 400 °C to 700 °C and a pressure ranging from 1 bar to 10 bar. The reactive mixture stream consists of steam and one or more hydrocarbons selected from naphtha, ethane, propane, gas oil, and liquefied petroleum gas. Afterwards, the fed reactive mixture stream travels to the structured ceramic bed (30) which is arranged in the reaction section (23).

The distribution section (22) and its related geometry ensures that the reactive mixture stream is homogeneously distributed on the cross section of the reaction section (23) before the reactive mixture stream enters into the structured ceramic bed (30) with the related electrical resistance heating element (40). The geometry of the distribution section (22) avoids presence of local eddies and/or dead volumes thus it ensure a narrow residence time distribution within the reactor shell (10). In this way, compared to any other disclosed configurations, the possibility to form carbon and/or to produce undesired products, due to excessive cracking, are minimized.

The distribution section (22) is required to homogeneously distribute the reactive mixture steam along the cross surface of the reactive stream duct (20) in proximity to the flow path inlet (32). In this way, each flowing passage (323) will draw the same amount of reactive mixture stream. This will ensure that fluid dynamic regimes, heat and mass transfer, energy requirement, and temperature profile will be constant in each flowing passage (323) of the structured ceramic bed (30). The distribution section (22) located within the reactive stream duct (20) compensate low Reynold number and radial velocity profile that characterize the flow of reactive mixture streams in reactor shells hosting structured bed. Absence of an optimized distribution section (22) could lead to preferential flow paths thus formation of high and low temperature zones within the structured ceramic bed (30), decreased lifetime of the electrical resistance heating element (40), and broad residence time distribution.

The reactive mixture stream passing through the structured ceramic bed (30) continuously exchanges heat and reacts. In the structured ceramic bed (30), the reactive mixture stream of steam and hydrocarbons reaches adequate temperatures that thermally activate non-catalytic gas-phase radical reaction of steam cracking.

The structured ceramic bed (30) is configured to prevent any stream bypass. In other words, the entire reactive mixture stream, flowing through the reaction section (23), enters into the hollow flow paths (32) and get in contact with the electrical resistance heating elements (40).

The structured ceramic bed (30) hosts the electrical resistance heating element (40) and acts as a physical boundary, refractory sleeve, that prevents electric shorts.

The electrical resistance heating element (40) generates the heat that is transferred to the structured ceramic bed (30) and the reactive mixture stream. The reactive mixture stream directly contacts both electrical heating element (40) and structured ceramic bed (30). In this way the resistances and limitations to the heat transfer are avoided and the surface temperature of the electrical heating element (40) is minimized.

The temperature difference between the electrical resistance heating elements (40) and the reactive mixture stream is minimized as the stream flows through the hollow flow paths (32) that are small annular gaps created by the electrical resistance heating elements (40) and the structured ceramic bed (30). This has a direct impact on the radial temperature gradient thus on the carbon forming potential and on the steam cracking selectivity.

The electric resistance heating element (40) mainly exchanges heat with the structured ceramic bed (30) via radiation benefitting from the maximized view factor. The reactive mixture stream exchanges heat with the electric resistance heating elements (40) and the structured ceramic bed (30) mainly via convection.

Contrary to traditional reactor coils used in steam cracking, the structured ceramic bed (30) and the electric resistance heating elements (40) do not contain components, such as Ni, that catalytically activate coke formation. Compared to any apparatus that has been disclosed for steam cracking, both structured ceramic bed (30) and the electric resistance heating element (40) offer surfaces that can undergo traditional coating procedures. Additionally, problems related to insufficient surface area, poor chemical affinity, and mismatch of the thermal expansion coefficients between support and coating materials are avoided. This is particularly relevant when comparing the herein disclosed design with configuration where ceramic coating are supported on metal structures.

In one of the disclosed embodiments, the barrier coating (311), provided on the surface of the structured ceramic bed (30), prevents direct contact of the reactive mixture stream with potential acid sites, i.e. Lewis acid site of Al₂O₃, that could partially activate coke formation.

In another embodiment, the barrier coating (311) is provided also on the surface of the electric resistance heating element (40). The addition of this barrier coating (311) enhances the stability of the electrical resistance heating elements (40) that usually relies on adherent, stable, and dense superficial oxide layers that act as an obstacle to the further oxidation/contact between metal bulk material and external environment. Additionally, the barrier coating (311) further enhance resistance to carbon diffusion that could lead to carburization and metal dusting of the electrical resistance heating element (40). This is particularly relevant in the case of steam cracking that involves environments/atmospheres at high carbon activities.

In another embodiment, other than the barrier coating (311), the structured ceramic bed (30) can support the catalytically active coating (312) that gasifies coke thermally produced by steam cracking gas-phase radical reactions. The catalytically active coating (312) converts solid carbon, following a well-known gasification reaction, that mainly involves H₂O or CO₂ as co-reactant.

In another embodiment, the catalytically active coating (312) is provided on the surface of the electrical resistance heating element (40). The catalytically active coating (312) activates carbon gasification following an endothermic reaction that use H₂O or CO₂, present in the reactive mixture stream. In this way, the endothermic reactions, that take place on the surface of electric resistance heating element (40), act as an energy sink that further decrease the skin temperature of electric resistance heating element (40). It results, that the lifetime is maximized.

Adding the barrier coating (311) and/or the catalytically active coating (312) minimize the formation and the accumulation of coke that could result in clogging of the hollow flow paths (32). At the same time, the resistance to heat transfer and the pressure drop buildup are avoided together with the necessity to regenerate the reactor via coke gasification using air and/or steam that would result into reactor downtime.

The electrical resistance heating elements (40) benefit from the mechanical support and geometrical confinement provided by the structured ceramic bed (30). Thanks to this configuration, to the extraordinary high stability of longitudinally shaped electrical resistance heating elements (40) and in particular to the presence of the barrier coating (311) or the catalytically active coating (312) the maximum surface load, the operating temperature, and the lifetime of the electrical heating means (40) are drastically increased compared to any other apparatus that has been disclosed. The surface load is not limited by electromagnetic forces, thermal expansion or lower physical properties induced by the extremely high operating temperatures up to 1200 °C. As results the herein disclosed configuration achieves heat fluxes at the surfaces in direct contact with the reactive mixture stream that can be higher than 100 kW m-². Power per volumes up to 30 MW m⁻³ can also be achieved. The features of the disclosed apparatus is given in the Table 1.

**Table 1 - Features of the herein disclosed apparatus**

| Surface to volume | Reaction temperature | Power per volume | Residence time | Pressure drops | Carbon formation |
|---|---|---|---|---|---|
| *[m² m⁻3]* | *[°C]* | *[MW m⁻³]* | *[s]* | *[bar]* | |
| 100 - 300 | < 1200 | 15 - 30 | < 0.1 | < 0.5 | minimized |

When using the coated structured ceramic bed (30) with the electrical resistance heating element (40) for steam cracking as herein disclosed, it is possible to:
- Maximize surface to volume
- Maximize reaction temperature
- Maximize power per volume
- Minimize residence time
- Minimize pressure drop
- Reduce CO₂ emissions
- Increase thermal efficiency.

Thanks to the electric heating, production of NOₓ usually vented at concentrations between 50 mg m⁻³ to 100 mg m⁻³ is avoided. Additionally, the absence of flue gas avoids necessity to build furnace convective sections and stacks that respectively recover heat and vent flue gases.

In the embodiment shown in Figure 2, at least two reaction sections (23) are hosted in the same reactor shell (10). This minimizes the number of the in-parallel connected reactor shells (10) and therefore minimizes the cost of the steam cracking plant that it is conceived as an assembly of multiple in-parallel connected electrically heated reactor shells (10).

The product stream is collected in the collecting section (24) and finally arrives at the product stream outlet (25) before leaving the reactor shell (10). In the embodiment having two reaction sections (23), the diverting section (111) diverts all product streams towards the product stream outlet (25). The diverting section (111) located within the collecting section (24) facilitates evacuation of the product stream avoiding potential accumulation and/or back mixing effects. The diverting section (111) hosted in the collecting section (24) can have any geometrical shapes including any paraboloid structure. The diverting section (111) narrows the residence time distribution of the product stream within the reactor shell (10) thus it minimizes the carbon formation and the productivity of secondary undesired products. The disclosed reactor shell (10) and the related collecting section (24) enables to host improved diverting sections (111) that cannot be installed in traditional steam cracking reactor configurations.

In case there is any coke formation, this is accumulated in the deposition chamber (241) provided in the collecting section (24) and does not block the product stream from travelling to the product stream outlet (25). Also, the deposition chamber (241) may collect any ceramic parts in case the structured ceramic bed (30) is damaged. Thanks to this configuration, the product stream does not entrain any foreign substance that could clog the product stream outlet (25) or downstream equipment.Traditional system for heat recovery from the product stream (transfer line exchanger) and downstream fractionation units remain in place since the disclosed reactor shell (10) and process well integrate with the existing up- and downstream facilities. In this case, a multiplicity of electrified steam crackers are in parallel connected to the downstream equipment via manifold. The possibility to use tubes and manifolds having internal refractory lining, thus working at low metal temperatures, facilitates mechanical design and construction without requiring expensive and complicated metal compensator or metal bellows that accommodates metal thermal expansions.

The above described reactor shell (10) structure and steam cracking process realized therein avoids fuel combustion and the CO₂ emission is reduced by at least 80 %; from more than 1 ton to only 0.2 ton of CO₂ per ton of ethylene produced. Zero CO₂ emission is also possible as the herein disclosed steam cracking process facilitates CO₂ capture; CO₂ is present only in the product stream and is not diluted with nitrogen in big flow rates of flue gases that leave the fired furnace.

By means of the above explained system and process with respect to olefin production via steam cracking, following results can be obtained:
- minimized characteristic length scale for heat transfer thus minimized temperature gradients within in the reaction section (23);
- minimized necessary steam to carbon ratio thanks to minimized temperature gradients;
- simplified downstream separation and purification processes thanks to higher product selectivities;
- minimized capital costs thanks to process intensification and numbering-up of a modular plant configuration (learning factor);
- maximized reaction temperature exploiting direct contact electrical resistance heating elements (40);
- minimized pressure drop thanks to high void fraction of the structured ceramic bed (30);
- minimized spalling of the coated structured ceramic bed (30) and the electrical resistance heating element (40), thanks to enhanced adhesion and stability of the barrier coating (311) and/or the catalytically active coating (312);
- minimized carbon formation thanks to barrier coating (311) and/or catalytically active coating (312) that results in longer operability before necessary regeneration via coke gasification;
- increased product selectivity thanks to minimized temperature gradients, pressure drop, residence time;
- possibility to exploit renewable electricity and therefore to use an inexpensive energy source;
- possibility to convert free electrons into chemical energy exploiting a traditional and extensively used thermochemical process;
- possibility to stabilize the electric grid modulating reactor productivity;

Additional advantages, related to the reactor shell (10) manufacturing and installation, are given below.

The disclosed reactor shell (10) configuration makes possible to operate the reactor at cold skin temperature and therefore to minimize the costs of the construction materials. All the mechanical parts are manufactured with steels for low temperatures with a drastic decrease in the capital cost of the plant.

The reactor shell (10) avoids manufacturing of expensive and complicated fired furnaces that contain burners and reactor coils, namely fireboxes, as well as economizers, preheaters, and superheaters involved in the convective section. As consequence to the absence of flue gases, there is a drastic reduction of surplus steam that currently prevents the shift from steam to electric driven equipment such as compressors.

The process realized using a multiplicity of reactor shells (10) makes possible to achieve plant modularization that minimizes the variation in plant productivity in case of routine and/or notordinary maintenance of plant sub-units.

The disclosed design makes possible to fast start up and shut down the steam cracking process thanks to the fast dynamic of the electric resistance heating elements. Additionally, the steam cracking equipment have cumulative volume lower by at least two orders of magnitude compared to fired cracking furnaces used in the current state of art. The heat capacity of the reactor is lower and the dynamic is faster. Within the disclosed configuration heating rates above 30 °C min⁻¹ can be achieved. This makes possible to achieve sector coupling (energy system integration) between the chemical and electricity sector that is required in a climate-neutral economy. The reactor shell (10) can vary its energy consumption thus its productivity to be able to stabilize the electric grid. In this way, plant operator create a new and additional revenue stream.

The reactor system disclosed therein can replace existing cracking furnaces or be integrated as an auxiliary plant section that boosts productivity, flexibility and/or compensates for downtime of existing fired steam crackers (debottlenecking and/or partial/stepwise revamping).

The steam cracking process of the present invention can be applied both on traditional centralized steam crackers used in existing petrochemical plants, but also in decentralized application where compact, inexpensive, and modular technology would help achieving zero routing gas flaring.

## Claims

1. A method for producing olefins via steam cracking from a fed reactive mixture stream composed of steam and hydrocarbons in a reactor shell (10) comprising at least one reactive stream duct (20) essentially having a reactive stream inlet (21), a product stream outlet (25) and a reaction section (23) provided between said reactive stream inlet (21) and product stream outlet (25), an insulation filling (11) at least partly encompassing said reactive stream duct (20), at least one monolithic structured ceramic bed (30) accommodated in said reaction section (23) and having a plurality of hollow flow paths (32) which are configured to allow the reactive mixture stream to pass therethrough, at least one electrical resistance heating element (40), powered by at least two electrical feeds (51) connected to an electrical power supply (50), configured to heat the reactive mixture stream to a predetermined temperature that initiates a non-catalytic gas phase radical reaction of steam cracking, and a coating (31) selected from a barrier coating (311) or a catalytically active coating (312) provided on the surface of the hollow flow paths (32) facing the electrical resistance heating element (40) contacting with the reactive mixture stream so that coke deposition is minimized, whereinthe barrier coating (311) and/or the catalytically active coating (312) has a thickness lower than 500 µm said method comprising the steps of:
placing said electrical resistance heating element (40) longitudinally within said hollow flow paths (32), extending co-axially to the flow direction of the reactive mixture stream in a manner that a flowing passage (323) still remains inside the hollow flow paths (32), wherein meandered sections (41) of the electrical resistance heating element (40) remain outside the hollow flow paths (32) and wherein the electrical resistance heating element (40) is inserted from the flow path inlet (321) of a first hollow flow path and exited from the opposite side of the same, the flow path outlet (322), and then, the electrical resistance heating element (40) enters a second hollow flow path (32), exits and continues its way in the remaining hollow flow paths (32);
energizing the electrical resistance heating element (40) via an electric power supply (50) so that the reactive mixture stream is heated up to 1200 °C
feeding reactive mixture stream with a temperature ranging from 400 °C to 700 °C and a pressure ranging from 1 bar to 10 bar to the reactor shell (10) through said reactive stream inlet (21)
allowing the reactive mixture stream to pass through said hollow flow paths (32) in a manner that the reactive mixture stream contacts the electrical resistance heating element (40) and the structured ceramic bed (30)
allowing a product stream of olefins to exit from said product stream outlet (25).

2. The method according to Claim 1, wherein the material of the coating (31) contains elements from the group IIA, IIIB, IVB, VIIB, IIIA, IVA of the periodic table.

3. The method according to Claim 1, wherein the coating (31) is also provided on the surface of the electrical resistance heating element (40) facing the structured ceramic bed (30).

## Patentansprüche

1. Verfahren zur Herstellung von Olefinen durch Dampfcracken aus einem zugeführten reaktiven Gemischstrom, bestehend aus Dampf und Kohlenwasserstoffen, in einem Reaktormantel (10), der mindestens einen reaktiven Strömungskanal (20) umfasst, der im Wesentlichen einen Einlass (21) für den reaktiven Strom, einen Auslass (25) für den Produktstrom und einen Reaktionsabschnitt (23) aufweist, der zwischen dem Einlass (21) für den reaktiven Strom und dem Auslass (25) für den Produktstrom angeordnet ist, einer Isolierfüllung (11), die den reaktiven Strömungskanal (20) zumindest teilweise umgibt, mindestens einem monolithisch strukturierten Keramikbett (30), das in dem Reaktionsabschnitt (23) untergebracht ist und eine Vielzahl von hohlen Strömungswegen (32) aufweist, die so ausgebildet sind, dass der reaktive Gemischstrom durch sie hindurchströmen kann, sowie mindestens einem elektrischen Widerstandsheizelement (40), das von mindestens zwei elektrischen Zuleitungen (51) gespeist wird, die mit einer Stromversorgung (50) verbunden sind, und das so ausgelegt ist, dass es den reaktiven Gemischstrom auf eine vorbestimmte Temperatur erhitzt, bei der eine nichtkatalytische Gasphasen-Radikalreaktion des Dampfcrackens ausgelöst wird, sowie eine Beschichtung (31), die aus einer Barrierebeschichtung (311) oder einer katalytisch aktiven Beschichtung (312), die auf der Oberfläche der hohlen Strömungswege (32) vorgesehen ist, die dem elektrischen Widerstandsheizelement (40) zugewandt sind und mit dem reaktiven Gemischstrom in Kontakt stehen, so dass die Koksablagerung minimiert wird, wobei die Barrierebeschichtung (311) und/oder die katalytisch aktive Beschichtung (312) eine Dicke von weniger als 500 µm aufweist, wobei das Verfahren die folgenden Schritte umfasst:
Anordnung des elektrischen Widerstandsheizelements (40) in Längsrichtung innerhalb der hohlen Strömungswege (32), wobei es sich koaxial zur Strömungsrichtung des reaktiven Gemischstroms erstreckt, und zwar so, dass innerhalb der hohlen Strömungswege (32) weiterhin ein Strömungskanal (323) verbleibt, wobei gewundene Abschnitte (41) des elektrischen Widerstandsheizelements (40) außerhalb der hohlen Strömungswege (32) verbleiben, und wobei das elektrische Widerstandsheizelement (40) vom Einlass (321) für den Strömungsweg eines ersten hohlen Strömungswegs aus in diesen eingeführt wird und auf der gegenüberliegenden Seite desselben, dem Auslass (322) des Strömungswegs, wieder austritt; anschließend tritt das elektrische Widerstandsheizelement (40) in einen zweiten hohlen Strömungsweg (32) ein, tritt aus diesem wieder aus und setzt seinen Weg in den verbleibenden hohlen Strömungswegen (32) fort;
Einspeisen von elektrischer Energie in das elektrische Widerstandsheizelement (40) über eine Stromversorgung (50), sodass der reaktive Gemischstrom auf 1200 °C erhitzt wird
Zuführen des reaktiven Gemischstroms mit einer Temperatur im Bereich von 400 °C bis 700 °C und einem Druck im Bereich von 1 bar bis 10 bar durch den Einlass (21) für den reaktiven Strom in den Reaktormantel (10)
Durchleiten des reaktiven Gemischstroms durch die hohlen Strömungswege (32) derart, dass der reaktive Gemischstrom mit dem elektrischen Widerstandsheizelement (40) und dem strukturierten Keramikbett (30) in Kontakt kommt
Ausströmenlassen eines Produktstroms aus Olefinen aus dem Auslass (25) für den Produktstrom.

2. Verfahren nach Anspruch 1, wobei das Material der Beschichtung (31) Elemente aus den Gruppen IIA, IIIB, IVB, VIIB, IIIA, IVA des Periodensystems enthält.

3. Verfahren nach Anspruch 1, wobei die Beschichtung (31) auch auf der Oberfläche des elektrischen Widerstandsheizelements (40) vorgesehen ist, die dem strukturierten Keramikbett (30) zugewandt ist.

## Revendications

1. Méthode de production d'oléfines par vapocraquage à partir d'un flux de mélange réactif alimenté composé de vapeur et d'hydrocarbures dans une enveloppe de réacteur (10) comprenant au moins un conduit de flux réactif (20) présentant essentiellement une entrée de flux réactif (21), une sortie de flux de produit (25) et une section de réaction (23) disposée entre ladite entrée de flux réactif (21) et ladite sortie de flux de produit (25), un remplissage isolant (11) entourant au moins partiellement ledit conduit de flux réactif (20), au moins un lit céramique structuré monolithique (30) logé dans ladite section de réaction (23) et présentant une pluralité de chemins d'écoulement creux (32) qui sont configurés pour permettre le passage du flux de mélange réactif à travers ceuxci, au moins un élément chauffant à résistance électrique (40), alimenté par au moins deux alimentations électriques (51) raccordées à une alimentation électrique (50), configuré pour chauffer le flux de mélange réactif à une température prédéterminée qui initie une réaction radicalaire non catalytique en phase gazeuse de vapocraquage, et un revêtement (31) sélectionné soit un revêtement barrière (311) soit un revêtement catalytiquement actif (312) disposé sur la surface des chemins d'écoulement creux (32) faisant face à l'élément chauffant à résistance électrique (40) entrant en contact avec le flux de mélange réactif de sorte que le dépôt de coke soit minimisé, dans laquelle le revêtement barrière (311) et/ou le revêtement catalytiquement actif (312) présente une épaisseur inférieure à 500 µm, ladite méthode comprenant les étapes consistant à :
placer ledit élément chauffant à résistance électrique (40) longitudinalement à l'intérieur desdits chemins d'écoulement creux (32), en s'étendant coaxialement à la direction d'écoulement du flux de mélange réactif de manière qu'un passage d'écoulement (323) demeure encore à l'intérieur des chemins d'écoulement creux (32), dans lequel des sections en méandre (41) de l'élément chauffant à résistance électrique (40) demeurent à l'extérieur des chemins d'écoulement creux (32) et dans lequel l'élément chauffant à résistance électrique (40) est introduit depuis l'entrée de chemin d'écoulement (321) d'un premier chemin d'écoulement creux et ressort du côté opposé de ce dernier, la sortie de chemin d'écoulement (322), puis l'élément chauffant à résistance électrique (40) entre dans un second chemin d'écoulement creux (32), ressort et poursuit son trajet dans les chemins d'écoulement creux (32) restants ;
alimenter en énergie l'élément chauffant à résistance électrique (40) au moyen d'une alimentation électrique (50) de sorte que le flux de mélange réactif soit chauffé jusqu'à 1200 °C
alimenter, à travers ladite entrée de flux réactif (21), un flux de mélange réactif présentant une température comprise entre 400 °C à 700 °C et une pression comprise entre 1 bar à 10 bar dans l'enveloppe de réacteur (10)
permettre au flux de mélange réactif de passer à travers lesdits chemins d'écoulement creux (32) de manière que le flux de mélange réactif entre en contact avec l'élément chauffant à résistance électrique (40) et le lit céramique structuré (30)
permettre à un flux de produit d'oléfines de sortir par ladite sortie de flux de produit (25).

2. Méthode selon la revendication 1, dans laquelle le matériau du revêtement (31) contient des éléments du groupe IIA, IIIB, IVB, VIIB, IIIA, IVA du tableau périodique.

3. Méthode selon la revendication 1, dans laquelle le revêtement (31) est également disposé sur la surface de l'élément chauffant à résistance électrique (40) faisant face au lit céramique structuré (30).
